# EUROPEAN PATENT APPLICATION

(11) **EP 4 769 161 A1**
(43) Date of publication of application: **01.07.2026**
(21) Application number: 25820970.9
(22) Date of filing: 30.04.2025
(51) Int. Cl.: G06F 13/12

(54) **RESOURCE CONTROL METHOD AND ELECTRONIC DEVICE**

(30) Priority: 12.06.2024 CN 202410759417
(71) Applicant: Honor Device Co., Ltd., Shenzhen 518040 (CN)
(72) Inventor: The designation of the inventor has not yet been filed
(74) Representative: Goddar, Heinz J.
(86) International application number: PCT/CN2025/092344
(87) International publication number: WO 2025/256291

(57) **Abstract**

This application relates to the field of data transmission technologies, and discloses a resource control method and an electronic device. The electronic device mentioned in this application includes a first screen, a second screen, a first SPI, a second SPI, and a first device, where the first screen and the second screen are located on different sides of the electronic device. When the first screen is in a display state and the first device is in a working state, the first screen may be made to be electrically connected to the first SPI, and the first device may be made to be electrically connected to the second SPI; or when the second screen is in a display state and the first device is in a working state, the second screen may be made to be electrically connected to the second SPI, and the first device may be made to be electrically connected to the first SPI. To be specific, an SPI resource of a screen not used by a user is provided to the first device for use, for example, an infrared device. In this way, when the first device (for example, an infrared device) is added, there is no need to add an SPI resource, saving costs of the electronic device.

## Description

This application claims priority to Chinese Patent Application No. 202410759417.X, filed with the China National Intellectual Property Administration on June 12, 2024 and entitled "RESOURCE CONTROL METHOD AND ELECTRONIC DEVICE", which is incorporated herein by reference in its entirety.

### TECHNICAL FIELD

This application relates to the field of data transmission technologies, and in particular, to a resource control method and an electronic device.

### BACKGROUND

With people's demand for remote control of devices such as air conditioners and smart televisions, an infrared device usually needs to be added to electronic devices such as mobile phones currently. A user can drive the infrared device to work by using an infrared application (for example, an air conditioner remote control application) installed on the electronic device, meeting the remote control demand.

In the electronic device, a processor and each piece of hardware need to be electrically connected via a corresponding serial peripheral interface (serial peripheral interface, SPI) for data sending and reception. For example, a display screen needs to be connected to the processor via a corresponding SPI to receive display data sent by the processor. It may be understood that SPI resources (for example, a quantity of SPIs) disposed in the processor in the electronic device are limited and usually are all allocated to corresponding hardware, that is, there is no extra SPI resource. Therefore, if another device, for example, an infrared device, is to be added, an SPI resource needs to be added, resulting in an increase in costs of the electronic device. In addition, the added SPI resource occupies a specific amount of space in the electronic device, resulting in an implementation failure for some electronic devices that aim for a small volume.

### SUMMARY

To resolve the foregoing problem that addition of an SPI resource due to addition of an infrared device results in high costs of an electronic device and space consumption, embodiments of this application provide a resource control method and an electronic device.

According to a first aspect, this application provides an electronic device. The electronic device includes a first screen, a second screen, a first SPI, a second SPI, and a first device, where the first screen and the second screen are located on different sides of the electronic device. Corresponding to that the first screen is in a display state and the first device is in a working state, the first screen is electrically connected to the first SPI, and the first device is electrically connected to the second SPI; or corresponding to that the second screen is in a display state and the first device is in a working state, the second screen is electrically connected to the second SPI, and the first device is electrically connected to the first SPI.

In this embodiment of this application, the electronic device may be any electronic device with a plurality of screens such as a foldable phone. For example, when the electronic device is a foldable phone, the first screen may be an inner screen, and the second screen may be an outer screen. The first screen being in the display state may be that the electronic device is in an unfolded state. In this case, the inner screen is in the display state, indicating that a user is using the inner screen and is not using the outer screen. The second screen being in the display state may be that the electronic device is in a folded state. In this case, the outer screen is in the display state, indicating that the user is using the outer screen and is not using the inner screen.

According to the solution, when the first device (for example, an infrared device) is added, there is no need to add an SPI resource. The infrared device is driven by use of an SPI resource corresponding to the inner screen or outer screen, saving costs of the electronic device. In addition, space in the electronic device can be saved, which is beneficial for use in a small-volume electronic device.

In a possible implementation of the first aspect, the first device is an infrared device.

In some embodiments, the first device may be a device using only a master output slave input pin of an SPI. For example, the first device may be an infrared device, or may be another device.

In a possible implementation of the first aspect, the electronic device includes a resource control module. The resource control module is configured to: when the first screen is in the display state and it is determined that the first device needs to be started, control the first screen to be electrically connected to the first SPI, and control the first device to be electrically connected to the second SPI; and the resource control module is configured to: when the second screen is in the display state and it is determined that the first device needs to be started, control the second screen to be electrically connected to the second SPI, and control the first device to be electrically connected to the first SPI.

In a possible implementation of the first aspect, the first SPI includes a first CS pin, a first MOSI pin, a first MISO pin, and a first CLK pin, the first CS pin, the first MOSI pin, the first MISO pin, and the first CLK pin are connected to the first screen, and the first MOSI pin is connected to the first device; and the second SPI includes a second CS pin, a second MOSI pin, a second MISO pin, and a second CLK pin, the second CS pin, the second MOSI pin, the second MISO pin, and the second CLK pin are connected to the second screen, and the second MOSI pin is connected to the first device.

In a possible implementation of the first aspect, the controlling the first screen to be electrically connected to the first SPI, and controlling the first device to be electrically connected to the second SPI includes: The resource control module controls the first MOSI pin to be electrically connected to the first screen, and controls the first device to be electrically connected to the second MOSI pin; and the controlling the second screen to be electrically connected to the second SPI, and controlling the first device to be electrically connected to the first SPI includes: The resource control module controls the second MOSI pin to be electrically connected to the second screen, and controls the first device to be electrically connected to the first MOSI pin.

In a possible implementation of the first aspect, the resource control module includes a first control device, a second control device, a first switch device, a second switch device, a third switch device, and a fourth switch device. An input terminal of the first switch device is connected to the first screen, an output terminal of the first switch device is separately connected to an input terminal of the second switch device and the first MOSI pin, and a control terminal of the first switch device is connected to the first control device; the input terminal of the second switch device is further connected to the first MOSI pin, an output terminal of the second switch device is connected to the first device, and a control terminal of the second switch device is connected to the second control device; an input terminal of the third switch device is connected to the first screen, an output terminal of the third switch device is separately connected to an input terminal of the fourth switch device and the second MOSI pin, and a control terminal of the third switch device is connected to the second control device; and the input terminal of the fourth switch device is further connected to the second MOSI pin, an output terminal of the fourth switch device is connected to the first device, and a control terminal of the fourth switch device is connected to the first control device.

In a possible implementation of the first aspect, the first switch device, the second switch device, the third switch device, and the fourth switch device are MOSs, and the first control device and the second control device are PMICs.

In this embodiment of this application, the first control device may be a first PMIC, or may be any device capable of implementing functions of the first control device, and the second control device may be a second PMIC, or may be any device capable of implementing functions of the second control device. The first switch device may be a first MOS, the second switch device may be a second MOS, the third switch device may be a third MOS, and the fourth switch device may be a fourth MOS.

In a possible implementation of the first aspect, the resource control module controls the first screen to be electrically connected to the first SPI and controls the first device to be electrically connected to the second SPI in the following manner: when the first screen is in the display state and it is determined that the first device needs to be started, the resource control module controls the first control device to output a high level to the control terminals of the first switch device and the fourth switch device, and controls the second control device to output a low level to the control terminals of the second switch device and the third switch device; or
the resource control module is configured to: when the second screen is in the display state and it is determined that the first device needs to be driven, control the second control device to output a high level to the control terminals of the second switch device and the third switch device, and control the first control device to output a low level to the control terminals of the first switch device and the fourth switch device.

According to a second aspect, this application provides a resource control method, used on an electronic device. The electronic device includes a first screen, a second screen, a first SPI, a second SPI, and a first device. The first screen and the second screen are located on different sides of the electronic device. The method includes:
corresponding to that the first screen is in a display state and it is determined that the first device needs to be started, controlling the first screen to be electrically connected to the first SPI, and controlling the first device to be electrically connected to the second SPI; or corresponding to that the second screen is in a display state and it is determined that the first device needs to be started, controlling the second screen to be electrically connected to the second SPI, and controlling the first device to be electrically connected to the first SPI.

According to a third aspect, this application provides an electronic device. The electronic device includes a memory, configured to store instructions executed by one or more processors of the electronic device, and a processor, being one of the processors of the electronic device and configured to perform the resource control method mentioned in this application.

### BRIEF DESCRIPTION OF DRAWINGS

FIG. 1 is a diagram of a foldable phone according to some embodiments of this application;
FIG. 2 is a diagram of an electronic device according to some embodiments of this application;
FIG. 3 is a diagram of a circuit connecting an inner screen and an SPI according to some embodiments of this application;
FIG. 4 is a diagram of a circuit connecting an outer screen and an SPI according to some embodiments of this application;
FIG. 5 is a diagram of a circuit connecting an infrared device and an SPI according to some embodiments of this application;
FIG. 6A is a diagram of a structure of an electronic device according to some embodiments of this application;
FIG. 6B is a diagram of a structure of an electronic device according to some embodiments of this application;
FIG. 7 is a block diagram of a structure of an electronic device according to some embodiments of this application;
FIG. 8 is a schematic flowchart of a resource control method according to some embodiments of this application; and
FIG. 9 is a diagram of a hardware structure of an electronic device according to some embodiments of this application.

### DESCRIPTION OF EMBODIMENTS

Illustrative embodiments of this application include, but are not limited to, a resource control method and an electronic device.

It may be understood that the electronic device provided in embodiments of this application includes, but is not limited to, any electronic device with a plurality of screens such as a foldable phone or a tablet computer. A type and form of the electronic device are not limited in embodiments of this application.

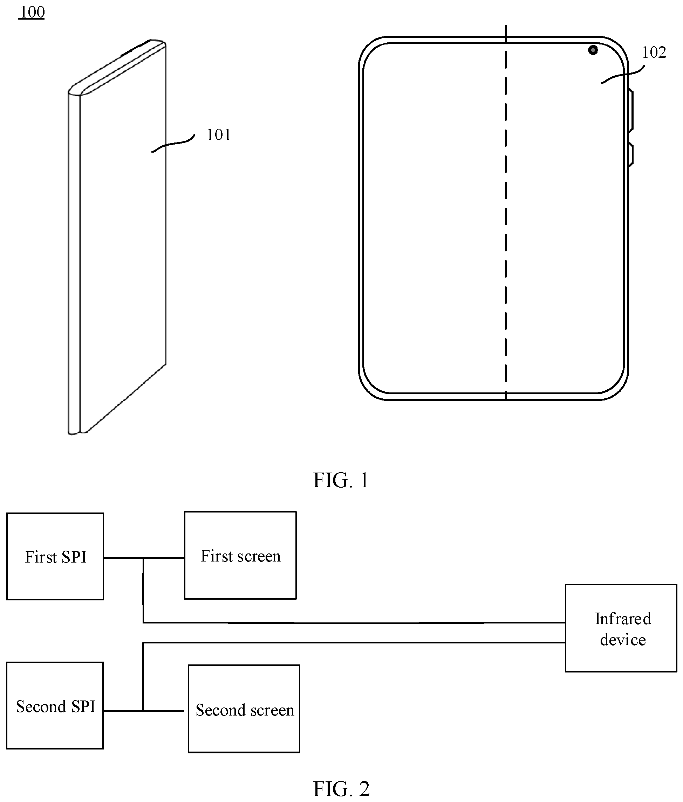

An example is used in which the electronic device is a foldable phone. Foldable phones include foldable phones that can fold horizontally and foldable phones that can fold vertically. For ease of description, an example is used for description in this application, in which the electronic device is a foldable phone that can fold vertically. FIG. 1 is a diagram of a foldable phone according to some embodiments of this application. As shown in FIG. 1, the foldable phone 100 includes an outer screen 101 and an inner screen 102. Typically, when the foldable phone 100 is in a folded state, it can be determined that a user is currently not using the inner screen 102, while when the foldable phone 100 is in an unfolded state, it can be determined that the user is currently using the inner screen 102 and is not using the outer screen 101.

Currently, for a foldable phone, each screen is allocated a corresponding separate SPI resource. However, a user usually uses only one of screens at a time.

Based on this, to resolve the foregoing problem, this application provides a resource allocation circuit, which can be used in a multi-screen electronic device. The resource allocation circuit may include a resource control module. The resource control module is configured to: when a first device needs to be started, enable an SPI pin of a screen that is currently not being used by a user to be electrically connected to the first device. The first device may be an infrared device. For example, when the user launches an infrared application to perform remote control, that is, when the resource control module detects an instruction that drives the infrared device, if it is determined that a foldable phone is currently in an unfolded state, that is, the user is currently using an inner screen and is not using an outer screen, the resource control module enables an SPI pin of the outer screen to be electrically connected to the infrared device; or when it is determined that a foldable phone is currently in a folded state, that is, the user is currently not using an inner screen, the resource control module is configured to enable an SPI pin of the inner screen to be electrically connected to the infrared device. In this way, when an infrared device is added, there is no need to add an SPI resource. The infrared device is driven by use of an SPI resource corresponding to the inner screen or outer screen, saving costs of the electronic device. In addition, space in the electronic device can be saved, which is beneficial for use in a small-volume electronic device.

In some embodiments, the first device may be a device using only a master output slave input (Master Output Slave Input, MOSI) pin of an SPI. For example, the first device may be an infrared device, or may be another device. The following uses an example for description, in which the first device is an infrared device.

FIG. 2 is a diagram of an electronic device. As shown in FIG. 2, in some embodiments, the electronic device may include a first screen, a second screen, a first SPI, a second SPI, and an infrared device. The first screen and the second screen are located on different sides of the electronic device. The first screen may be an inner screen, and the second screen may be an outer screen.

Corresponding to that the first screen is in a display state and the infrared device is in a working state, the first screen is electrically connected to the first SPI, and the infrared device is electrically connected to the second SPI. It may be understood that, when the first screen is in the display state, it indicates that the first screen needs to use an SPI resource. In this case, the second SPI corresponding to the second screen that is not using an SPI resource may be electrically connected to the infrared device, to drive the infrared device.

Corresponding to that the second screen is in a display state and the infrared device is in a working state, the second screen is electrically connected to the second SPI, and the infrared device is electrically connected to the first SPI. It may be understood that, when the second screen is in the display state, it indicates that the second screen needs to use an SPI resource. In this case, the first SPI corresponding to the first screen that is not using an SPI resource may be electrically connected to the infrared device, to drive the infrared device.

In some embodiments, the electronic device further includes a resource control module. The resource control module is configured to: when the first screen is in the display state and it is determined that the infrared device needs to be started, control the first screen to be electrically connected to the first SPI, and control the infrared device to be electrically connected to the second SPI; and configured to: when the second screen is in the display state and it is determined that the infrared device needs to be started, control the second screen to be electrically connected to the second SPI, and control the infrared device to be electrically connected to the first SPI.

The following describes a solution in this application by using an example in which the first screen is an inner screen and the second screen is an outer screen.

For a clearer understanding of the implementation solution in this application, the following first describes a circuit structure of an SPI, a circuit connecting an infrared device and an SPI, a circuit connecting an inner screen and an SPI, and a circuit connecting an outer screen and an SPI.

An SPI typically includes four pins: a chip select (chip select, CS) pin, a clock (clock, CLK) pin, a master output slave input (master output slave input, MOSI) pin, and a master input slave output (master input slave output, MISO) pin.

The CS pin is used in a case in which there are a plurality of slave devices. In this case, a master device separately controls, based on a plurality of CS pins, slave devices that communicate with the master device. It may be understood that the master device may be a processor, while the slave devices may be an inner screen, an outer screen, an infrared device, and the like mentioned in this application.

The CLK pin is used by the master device to provide a clock signal to a slave device. The master and slave devices separately send data to a data line on a rising or falling edge of a clock line, and read data from the data line on the falling or rising edge.

The MOSI pin is configured to implement data transmission from the master device to a slave device.

The MISO pin is configured to implement data transmission from a slave device to the master device.

It should be noted that, in a case in which an SPI controls an infrared device, a processor sends an SPI signal to the infrared device via the SPI. Therefore, in this case, the processor serves as the master device, and the infrared device serves as a slave device.

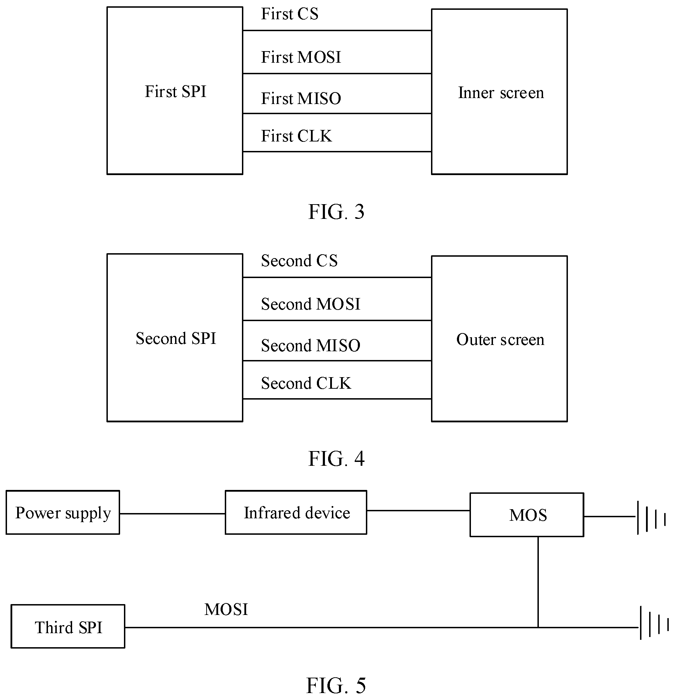

FIG. 3 is a diagram of a circuit connecting an inner screen and an SPI. As shown in FIG. 3, four pins of a first SPI (for example, a first CS pin, a first MOSI pin, a first MISO pin, and a first CLK pin) are all connected to the inner screen. It may be understood that the first SPI may be an SPI in a processor.

FIG. 4 is a diagram of a circuit connecting an outer screen and an SPI. As shown in FIG. 4, four pins of a second SPI (for example, a second CS pin, a second MOSI pin, a second MISO pin, and a second CLK pin) are all connected to the outer screen. It may be understood that the second SPI may be an SPI in a processor.

FIG. 5 is a diagram of a circuit connecting an infrared device and an SPI. As shown in FIG. 5, one end of the infrared device is connected to an MOSI pin of a third SPI via a metal-oxide-semiconductor field-effect transistor (metal-oxide-semiconductor field-effect transistor, MOSFET, abbreviated as MOS), to receive data sent by a processor, while the other end of the infrared device is connected to a power supply.

It may be understood that the third SPI may be an SPI in the processor. The MOS is electrically connected when a signal received at a gate is a high level. In this case, the infrared device receives an SPI signal sent by the processor. The MOS is disconnected when a signal received at the gate is a low level. In this case, the infrared device does not receive an SPI signal sent by the processor. Based on this, the processor can send an SPI signal to the infrared device via the MOSI pin, so that the infrared device sends an infrared signal corresponding to an infrared application.

It may be understood that the SPI mentioned in this embodiment of this application may be an SPI particularly disposed in the processor, or may be an SPI function implemented by another pin in the processor.

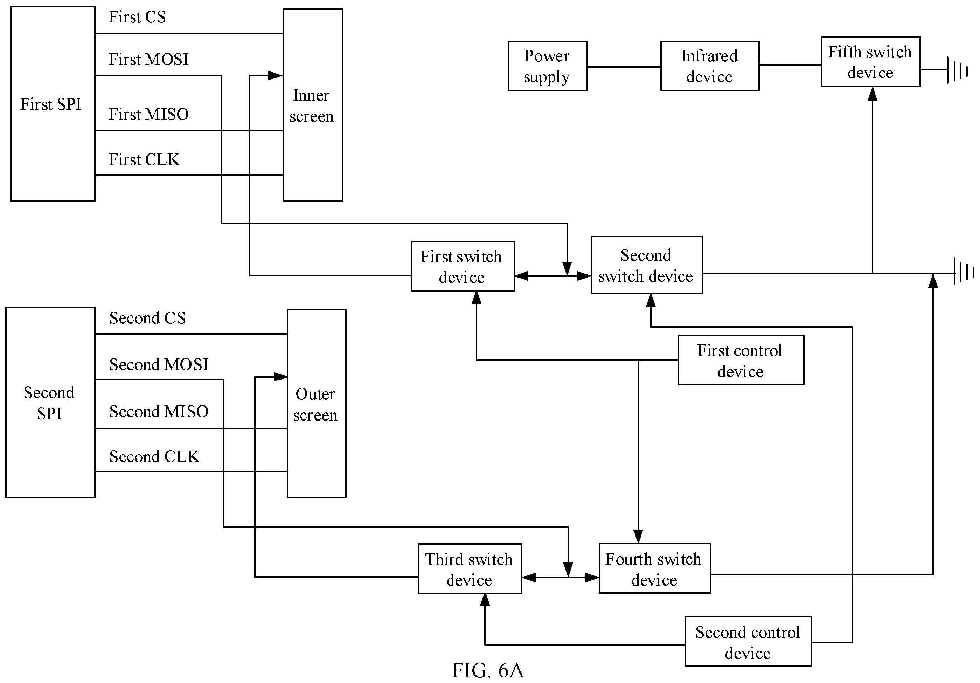

FIG. 6A is a diagram of a structure of an electronic device. As shown in FIG. 6A, the electronic device may include an inner screen, an outer screen, a first SPI, a second SPI, an infrared device, a fifth switch device, a power supply, and a resource control module.

The first SPI includes a first CS pin, a first MOSI pin, a first MISO pin, and a first CLK pin. The first CS pin, the first MOSI pin, the first MISO pin, and the first CLK pin are connected to the inner screen. The first MOSI pin is further connected to the infrared device.

The second SPI includes a second CS pin, a second MOSI pin, a second MISO pin, and a second CLK pin. The second CS pin, the second MOSI pin, the second MISO pin, and the second CLK pin are connected to the outer screen. The second MOSI pin is further connected to the infrared device.

The resource control module includes a first control device, a second control device, a first switch device, a second switch device, a third switch device, and a fourth switch device.

An input terminal of the first switch device is connected to the inner screen, an output terminal of the first switch device is separately connected to an input terminal of the second switch device and the first MOSI pin, and a control terminal of the first switch device is connected to the first control device.

The input terminal of the second switch device is further connected to the first MOSI pin, an output terminal of the second switch device is connected to the fifth switch device, the fifth switch device is connected to the infrared device, and a control terminal of the second switch device is connected to the second control device.

An input terminal of the third switch device is connected to the inner screen, an output terminal of the third switch device is separately connected to an input terminal of the fourth switch device and the second MOSI pin, and a control terminal of the third switch device is connected to the second control device.

The input terminal of the fourth switch device is further connected to the second MOSI pin, an output terminal of the fourth switch device is connected to the fifth switch device, the fifth switch device is connected to the infrared device, and a control terminal of the fourth switch device is connected to the first control device.

In some embodiments, when a signal input into the control terminal of the first switch device is valid (for example, a high level is input), the input and output terminals of the first switch device are electrically connected; or when a signal input into the control terminal of the first switch device is invalid (for example, a low level is input), the input and output terminals of the first switch device are disconnected. The first switch device may be a first MOS. The first MOS may be an N-type MOS (NMOS for short) or a P-type MOS (PMOS for short). When the first MOS is an NMOS, an input terminal of the first MOS may be a drain, an output terminal may be a source, and a control terminal may be a gate. When the first MOS is a PMOS, an input terminal of the first MOS may be a source, an output terminal may be a drain, and a control terminal may be a gate. The first switch device may alternatively be any other device capable of implementing functions of the first switch device (for example, a transistor, where corresponding to an NPN transistor, the input terminal, the output terminal, and the control terminal may be a collector, an emitter, and a base, respectively; or corresponding to a PNP transistor, the input terminal, the output terminal, and the control terminal may be an emitter, a collector, and a base, respectively). This is not limited herein in this application.

In some embodiments, when a signal input into the control terminal of the second switch device is valid (for example, a high level is input), the input and output terminals of the second switch device are electrically connected; or when a signal input into the control terminal of the second switch device is invalid, the input and output terminals of the second switch device are disconnected. The second switch device may be a second MOS. The second MOS may be an NMOS or a PMOS. When the second MOS is an NMOS, an input terminal of the second MOS may be a drain, an output terminal may be a source, and a control terminal may be a gate. When the second MOS is a PMOS, an input terminal of the second MOS may be a source, an output terminal may be a drain, and a control terminal may be a gate. The second switch device may alternatively be any other device capable of implementing functions of the second switch device (for example, a transistor, where corresponding to an NPN transistor, the input terminal, the output terminal, and the control terminal may be a collector, an emitter, and a base, respectively; or corresponding to a PNP transistor, the input terminal, the output terminal, and the control terminal may be an emitter, a collector, and a base, respectively). This is not limited herein in this application.

In some embodiments, when a signal input into the control terminal of the third switch device is valid (for example, a high level is input), the input and output terminals of the third switch device are electrically connected; or when a signal input into the control terminal of the third switch device is invalid, the input and output terminals of the third switch device are disconnected. The third switch device may be a third MOS. The third MOS may be an NMOS or a PMOS. When the third MOS is an NMOS, an input terminal of the third MOS may be a drain, an output terminal may be a source, and a control terminal may be a gate. When the third MOS is a PMOS, an input terminal of the third MOS may be a source, an output terminal may be a drain, and a control terminal may be a gate. The third switch device may alternatively be any other device capable of implementing functions of the third switch device (for example, a transistor, where corresponding to an NPN transistor, the input terminal, the output terminal, and the control terminal may be a collector, an emitter, and a base, respectively; or corresponding to a PNP transistor, the input terminal, the output terminal, and the control terminal may be an emitter, a collector, and a base, respectively). This is not limited herein in this application.

In some embodiments, when a signal input into the control terminal of the fourth switch device is valid (for example, a high level is input), the input and output terminals of the fourth switch device are electrically connected; or when a signal input into the control terminal of the fourth switch device is invalid, the input and output terminals of the fourth switch device are disconnected. The fourth switch device may be a fourth MOS. The fourth MOS may be an NMOS or a PMOS. When the fourth MOS is an NMOS, an input terminal of the fourth MOS may be a drain, an output terminal may be a source, and a control terminal may be a gate. When the fourth MOS is a PMOS, an input terminal of the fourth MOS may be a source, an output terminal may be a drain, and a control terminal may be a gate. The fourth switch device may alternatively be any other device capable of implementing functions of the fourth switch device (for example, a transistor, where corresponding to an NPN transistor, the input terminal, the output terminal, and the control terminal may be a collector, an emitter, and a base, respectively; or corresponding to a PNP transistor, the input terminal, the output terminal, and the control terminal may be an emitter, a collector, and a base, respectively). This is not limited herein in this application.

In some embodiments, the first control device may be a first power management integrated circuit (Power Management Integrated Circuit, PMIC), or may be any device capable of implementing functions of the first control device, and the second control device may be a second PMIC, or may be any device capable of implementing functions of the second control device.

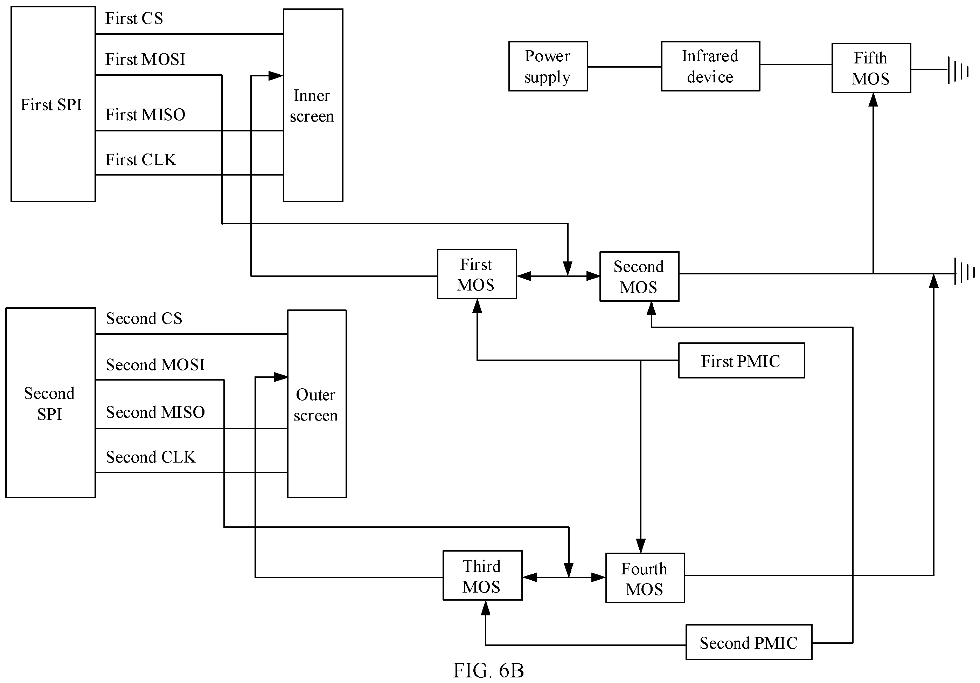

The following describes the structure of the electronic device by using an example in which the first switch device shown in FIG. 6B is the first MOS, the second switch device is the second MOS, the third switch device is the third MOS, the fourth switch device is the fourth MOS, the first control device is the first PMIC, the second control device is the second PMIC, and the fifth switch device is a fifth MOS.

As shown in FIG. 6B, the resource control module includes the first PMIC, the second PMIC, the first MOS, the second MOS, the third MOS, and the fourth MOS.

The input terminal of the first MOS is connected to the inner screen, the output terminal of the first MOS is separately connected to the input terminal of the second MOS and the first MOSI pin, and the control terminal of the first MOS is connected to the first PMIC.

The input terminal of the second MOS is further connected to the first MOSI pin, the output terminal of the second MOS is connected to the fifth MOS, the fifth MOS is connected to the infrared device, and the control terminal of the second MOS is connected to the second PMIC.

The input terminal of the third MOS is connected to the inner screen, the output terminal of the third MOS is separately connected to the input terminal of the fourth MOS and the second MOSI pin, and the control terminal of the third MOS is connected to the second PMIC.

The input terminal of the fourth MOS is further connected to the second MOSI pin, the output terminal of the fourth MOS is connected to the fifth MOS, the fifth MOS is connected to the infrared device, and the control terminal of the fourth MOS is connected to the first PMIC.

When an infrared application's request of driving the infrared device is detected, and it is determined that the electronic device is currently in an unfolded state, the resource control module is configured to: control the inner screen to be electrically connected to the first SPI, and control the infrared device to be electrically connected to the second SPI, which is specifically as follows:
when detecting the infrared application's request of driving the infrared device, and determining that the electronic device is currently in the unfolded state or determining that the inner screen of the electronic device is currently in a display state, the electronic device may control, by using the resource control module, the first MOSI pin to be electrically connected to the inner screen, and the infrared device to be electrically connected to the second MOSI pin. In some embodiments, the electronic device may control the first PMIC to output a high level to the gates of the first MOS and the fourth MOS, so that the source and drain of the first MOS are electrically connected and the source and drain of the fourth MOS are electrically connected, and control the second PMIC to output a low level to the second MOS and the third MOS, so that the source and drain of the first MOS are disconnected and the source and drain of the fourth MOS are disconnected. In this way, the first MOSI pin is electrically connected to the inner screen, and the infrared device is electrically connected to the second MOSI pin. In addition, the electronic device may control the first CS pin, the first MISO pin, and the first CLK pin to be electrically connected to the inner screen. In this way, the infrared device can be driven to work, while the inner screen performs displaying.

It may be understood that, when a system on chip (system on chip, SOC) needs to communicate with the inner screen, that is, when the inner screen needs to be controlled to perform displaying, the first PMIC may be pulled up, that is, the first PMIC may be controlled to output a high level to the gates of the first MOS and the fourth MOS, so that the source and drain of the first MOS are electrically connected and the source and drain of the fourth MOS are electrically connected, and the second PMIC may be pulled down, that is, the second PMIC may be controlled to output a low level to the second MOS and the third MOS, so that the source and drain of the second MOS are disconnected and the source and drain of the third MOS are disconnected. In this case, the first SPI, the first MOS, and the inner screen are electrically connected, and the second SPI, the fourth MOS, and the infrared device are electrically connected, while the first SPI, the second MOS, and the infrared device are not electrically connected, and the second SPI, the third MOS, and the outer screen are not electrically connected. As such, an MOSI signal of the first SPI flows only to the inner screen and does not flow to the infrared device, while an MOSI signal of the second SPI flows only to the infrared device and does not flow to the outer screen. In addition, the MOSI signal of the first SPI and the MOSI signal of the second SPI do not interfere with each other when being output simultaneously. When the inner screen performs displaying and the infrared device needs to be started, the MOSI signal of the first SPI may be directly controlled to be output to the inner screen, and the MOSI signal of the second SPI may be directly controlled to be output to the infrared device.

When the infrared application's request of driving the infrared device is detected, and it is determined that the electronic device is currently in a folded state, the resource control module is configured to: control the outer screen to be electrically connected to the second SPI, and control the infrared device to be electrically connected to the first SPI, which is specifically as follows:
when detecting the infrared application's request of driving the infrared device, and determining that the electronic device is currently in the folded state or determining that the outer screen of the electronic device is currently in the display state, the electronic device may control, by using the resource control module, the second MOSI pin to be electrically connected to the outer screen, and the infrared device to be electrically connected to the first MOSI pin. In some embodiments, the electronic device may control the second PMIC to be in a high-level state (that is, control the second PMIC to output a high level to the second MOS and the third MOS, so that the source and drain of the second MOS are electrically connected and the source and drain of the third MOS are electrically connected), and control the first PMIC to be in a low-level state (control the first PMIC to output a low level to the gates of the first MOS and the fourth MOS, so that the source and drain of the first MOS are disconnected and the source and drain of the fourth MOS are disconnected). In this way, the first MOSI pin is electrically connected to the inner screen, and the infrared device is electrically connected to the second MOSI pin. The electronic device may further control the second CS pin, the second MISO pin, and the second CLK pin to be electrically connected to the outer screen. In this way, the infrared device can be driven to work, while the outer screen performs displaying.

When the SOC needs to communicate with the outer screen, that is, when the outer screen needs to be controlled to perform displaying, the second PMIC may be pulled up to be in the high-level state, that is, the second PMIC may be controlled to output a high level to the second MOS and the third MOS, so that the source and drain of the second MOS are electrically connected and the source and drain of the third MOS are electrically connected, and the first PMIC may be pulled down to be in the low-level state, that is, the first PMIC may be controlled to output a low level to the gates of the first MOS and the fourth MOS, so that the source and drain of the first MOS are disconnected and the source and drain of the fourth MOS are disconnected. In this case, the first SPI, the first MOS, and the inner screen are not electrically connected, and the second SPI, the fourth MOS, and the infrared device are not electrically connected, while the first SPI, the second MOS, and the infrared device are electrically connected, and the second SPI, the third MOS, and the outer screen are electrically connected. As such, the MOSI signal of the second SPI flows only to the outer screen and does not flow to the infrared device, while the MOSI signal of the first SPI flows only to the infrared device and does not flow to the outer screen. In addition, the MOSI signal of the first SPI and the MOSI signal of the second SPI do not interfere with each other when being output simultaneously. When the outer screen performs displaying and the infrared device needs to be started, the MOSI signal of the second SPI may be directly controlled to be output to the inner screen, and the MOSI signal of the first SPI may be directly controlled to be output to the infrared device.

In some embodiments, this application provides a resource control method, used on the electronic device mentioned in this application. The method includes:
corresponding to that an inner screen is in a display state and it is determined that an infrared device needs to be started, controlling the inner screen to be electrically connected to a first SPI, and controlling the infrared device to be electrically connected to a second SPI; or
corresponding to that an outer screen is in a display state and it is determined that an infrared device needs to be started, controlling the outer screen to be electrically connected to a second SPI, and controlling the infrared device to be electrically connected to a first SPI.

In some embodiments, when the inner screen is in the display state and it is determined that the infrared device needs to be started, a resource control module controls the inner screen to be electrically connected to the first SPI, and controls the infrared device to be electrically connected to the second SPI; or
when the outer screen is in the display state and it is determined that the infrared device needs to be started, the resource control module controls the outer screen to be electrically connected to the second SPI, and controls the infrared device to be electrically connected to the first SPI. Details about controlling the inner screen to be electrically connected to the first SPI and controlling the infrared device to be electrically connected to the second SPI are as described above, and therefore, are not described herein again.

In some embodiments, when it is determined that the electronic device is in a first state, it can be determined that the inner screen is in the display state, with the first state being an unfolded state; or when it is determined that the electronic device is in a second state, it can be determined that the outer screen is in the display state, with the second state being a folded state.

The following describes the resource control method in this embodiment of this application with reference to a structure of an electronic device.

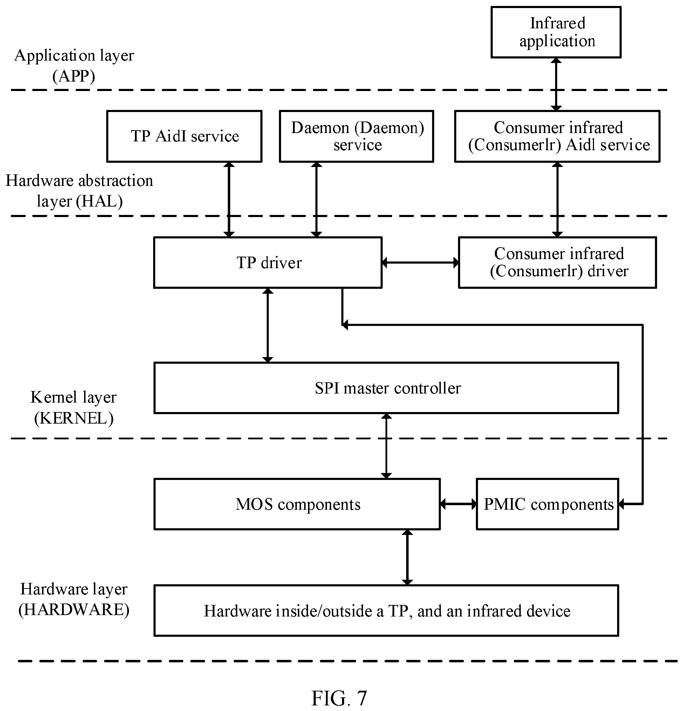

FIG. 7 is a block diagram of a structure of an electronic device according to an embodiment of this application. The electronic device includes an application layer, a hardware abstraction layer, a kernel layer, and a hardware layer.

As shown in FIG. 7, the application layer may include an infrared application. The infrared application is used to drive an infrared device in response to a user's request of driving the infrared device. The infrared application is used to detect a request of emitting an infrared signal, and send the request of emitting the infrared signal to a consumer infrared (ConsumerIr) Android interface definition language (Android interface definition language, Aidl) service.

The application layer may further include applications not shown in FIG. 7, such as Camera, Gallery, Calendar, Phone, Maps, Navigation, Bluetooth, Music, Videos, and Messages.

The hardware abstraction layer (hardware abstraction layer, HAL) includes a touch panel (touch panel, TP) Aidl service, a daemon (Daemon) service, and the consumer infrared (ConsumerIr) Aidl service.

The TP Aidl service is used to detect a status of the electronic device, for example, a folded state and an unfolded state.

The consumer infrared (ConsumerIr) Aidl service is used to send SPI data corresponding to the infrared signal to a consumer infrared (ConsumerIr) driver.

The kernel layer includes a TP driver, the consumer infrared (ConsumerIr) driver, and an SPI master controller.

The consumer infrared (ConsumerIr) driver is used to configure an SPI data transmission rate to an SPI data transmission rate corresponding to the infrared device, and send an SPI data transmission request corresponding to the infrared signal to the TP driver.

The TP driver is used to: upon receiving the SPI data transmission request, control a second PMIC to be in a high-level state and a first PMIC to be in a low-level state if the electronic device (for example, a mobile phone) is currently in the folded state; or control a first PMIC to be in a high-level state and a second PMIC to be in a low-level state if the mobile phone is currently in the unfolded state.

The SPI master controller is used to control SPIs in the electronic device.

The hardware layer includes MOS devices (such as the first MOS, the second MOS, the third MOS, and the fourth MOS mentioned above), PMIC devices (such as the first PMIC and the second PMIC mentioned above), hardware inside and outside a TP, and the infrared device.

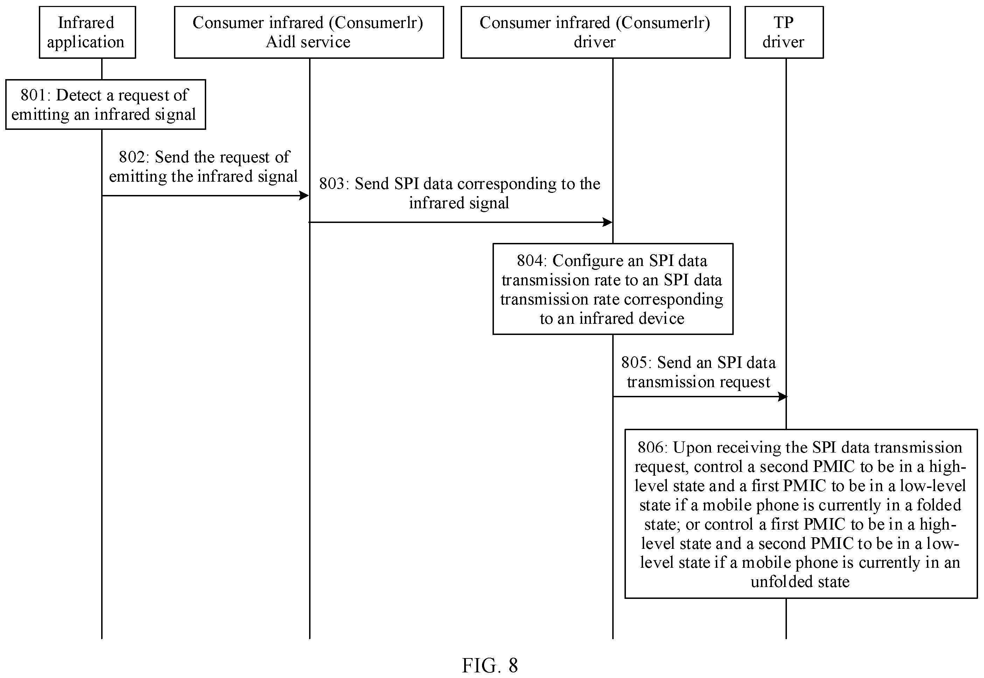

FIG. 8 is a schematic flowchart of a resource control method according to an embodiment of this application. The method may be used on the electronic device mentioned in this application. The method includes the following steps.

801: An infrared application detects a request of emitting an infrared signal.

In some embodiments, the infrared application may include an application that implements functions such as remotely controlling an air conditioner and remotely controlling a television. When a user initiates a remote control request to an air conditioner, a television, or the like by using the infrared application, the infrared application detects a request of emitting an infrared signal.

802: The infrared application sends the request of emitting the infrared signal to a consumer infrared (ConsumerIr) Aidl service.

803: The consumer infrared (ConsumerIr) Aidl service sends SPI data corresponding to the infrared signal to a consumer infrared (ConsumerIr) driver.

In some embodiments, the SPI data corresponding to the infrared signal may be SPI data packets corresponding to the infrared signal.

804: The consumer infrared (ConsumerIr) driver configures an SPI data transmission rate to an SPI data transmission rate corresponding to an infrared device.

It may be understood that, because an SPI data transmission rate corresponding to a TP differs from a data transmission rate corresponding to an infrared device, the SPI data transmission rate corresponding to the TP needs to be changed to the SPI data transmission rate corresponding to the infrared device.

In some embodiments, the SPI data transmission rate corresponding to the infrared device may be preset based on an actual requirement. This is not limited herein.

805: The consumer infrared (ConsumerIr) driver sends an SPI data transmission request to a TP driver.

In some embodiments, the consumer infrared (ConsumerIr) driver may send the SPI data to an interface providing SPI data transmission in the TP driver.

806: Upon receiving the SPI data transmission request, the TP driver controls a second PMIC to be in a high-level state and a first PMIC to be in a low-level state if a mobile phone is currently in a folded state; or controls a first PMIC to be in a high-level state and a second PMIC to be in a low-level state if a mobile phone is currently in an unfolded state.

In some embodiments, the TP driver may preset hardware resources based on a status of the electronic device. For example, if it is determined that the mobile phone is in the folded state, that is, the user needs to use an outer screen, the TP driver may change hardware resource settings of a CS pin and a CLK pin used by the outer screen to SPI, and change hardware resource settings of a CS pin and a CLK pin used by an inner screen to GPIO, facilitating allocation of an SPI resource corresponding to the inner screen to the infrared device upon receiving an infrared signal transmission request. If it is determined that the mobile phone is in the unfolded state, that is, the user needs to use an inner screen, the TP driver may change hardware resource settings of a CS pin and a CLK pin used by the inner screen to SPI, and change hardware resource settings of a CS pin and a CLK pin used by an outer screen to GPIO, facilitating allocation of an SPI resource corresponding to the outer screen to the infrared device upon receiving an infrared signal transmission request.

In some embodiments, upon receiving the SPI data transmission request: If it is determined that the mobile phone is in the folded state, that is, the user needs to use an outer screen, the TP driver may change hardware resource settings of a CS pin and a CLK pin used by the outer screen to SPI, and change hardware resource settings of a CS pin and a CLK pin used by an inner screen to GPIO, facilitating allocation of an SPI resource corresponding to the inner screen to the infrared device upon receiving an infrared signal transmission request; or if it is determined that the mobile phone is in the unfolded state, that is, the user needs to use an inner screen, the TP driver may change hardware resource settings of a CS pin and a CLK pin used by the inner screen to SPI, and change hardware resource settings of a CS pin and a CLK pin used by an outer screen to GPIO, facilitating allocation of an SPI resource corresponding to the outer screen to the infrared device upon receiving an infrared signal transmission request.

In some embodiments, if the mobile phone is currently in the folded state, it indicates that the user is using an outer screen. In this case, the second PMIC may be pulled up to be in the high-level state, that is, the second PMIC may be controlled to output a high level to a second MOS and a third MOS, so that a source and a drain of the second MOS are electrically connected and a source and a drain of the third MOS are electrically connected, and the first PMIC may be pulled down to be in the low-level state, that is, the first PMIC may be controlled to output a low level to gates of a first MOS and a fourth MOS, so that a source and a drain of the first MOS are disconnected and a source and a drain of the fourth MOS are disconnected. In this case, a first SPI, the first MOS, and an inner screen are not electrically connected, and a second SPI, the fourth MOS, and the infrared device are not electrically connected, while the first SPI, the second MOS, and the infrared device are electrically connected, and the second SPI, the third MOS, and the outer screen are electrically connected. As such, an MOSI signal of the second SPI flows only to the outer screen and does not flow to the infrared device, while an MOSI signal of the first SPI flows only to the infrared device and does not flow to the inner screen. In addition, the MOSI signal of the first SPI and the MOSI signal of the second SPI do not interfere with each other when being output simultaneously. When the infrared device needs to be started, the MOSI signal of the second SPI may be directly controlled to be output to the outer screen, and the MOSI signal of the first SPI may be directly controlled to be output to the infrared device. In addition, there is no electrical signal on a first CS pin, a first CLK pin, or a first MISO pin that is connected to the inner screen.

In some embodiments, if the mobile phone is currently in the unfolded state, it indicates that the user is using an inner screen. In this case, the first PMIC may be pulled up, that is, the first PMIC may be controlled to output a high level to gates of a first MOS and a fourth MOS, so that a source and a drain of the first MOS are electrically connected and a source and a drain of the fourth MOS are electrically connected, and the second PMIC may be pulled down, that is, the second PMIC may be controlled to output a low level to a second MOS and a third MOS, so that a source and a drain of the second MOS are disconnected and a source and a drain of the third MOS are disconnected. In this case, a first SPI, the first MOS, and the inner screen are electrically connected, and a second SPI, the fourth MOS, and the infrared device are electrically connected, while the first SPI, the second MOS, and the infrared device are not electrically connected, and the second SPI, the third MOS, and an outer screen are not electrically connected. As such, an MOSI signal of the first SPI flows only to the inner screen and does not flow to the infrared device, while an MOSI signal of the second SPI flows only to the infrared device and does not flow to the outer screen. In addition, the MOSI signal of the first SPI and the MOSI signal of the second SPI do not interfere with each other when being output simultaneously. When the inner screen performs displaying and the infrared device needs to be started, the MOSI signal of the first SPI may be directly controlled to be output to the inner screen, and the MOSI signal of the second SPI may be directly controlled to be output to the infrared device. In addition, there is no electrical signal on a second CS pin, a second CLK pin, or a second MISO pin that is connected to the outer screen.

To be specific, in this embodiment of this application, the TP driver can implement the following: corresponding to that the inner screen is in a display state and it is determined that the infrared device needs to be started, controlling the inner screen to be electrically connected to the first SPI, and controlling the infrared device to be electrically connected to the second SPI; or
corresponding to that the outer screen is in a display state and it is determined that the infrared device needs to be started, controlling the outer screen to be electrically connected to the second SPI, and controlling the infrared device to be electrically connected to the first SPI.

For a purpose of implementing the resource control method in this application, a device tree file (device tree source, DTS, which may be referred to as a dtsi file) corresponding to the infrared device and a dtsi file of the TP need to be configured. The following describes the configurations separately.

Configuration of the dtsi file of the infrared device: For a purpose of ensuring proper start-up of a kernel driver corresponding to the infrared device, the infrared device may be configured as a slave device of an SPI master controller corresponding to the TP, and a chip select value of the CS pin may be set to 1 during configuration of the dtsi file of the infrared device.

Configuration of the dtsi file of the TP: In the dtsi of the TP, property values of the SPI master controller are overwritten, and chip pin control setup program (pinctrl) settings corresponding to a case in which the SPI master controller (bus) is active (active) and a case in which the SPI master controller sleeps (sleep) are reset. It may be understood that default system settings are as follows: The chip pin control setup program settings corresponding to the active (active) state are functions (func) of a CLK pin, an MOSI pin, an MISO pin, and a CS pin being set to SPI; and the chip pin control setup program settings corresponding to the sleep (sleep) state are the functions (func) of the CLK pin, the MOSI pin, the MISO pin, and the CS pin being set to GPIO.

In this embodiment of this application, when the infrared device uses the SPI resource of the outer screen or inner screen, the infrared device uses only the MOSI pin. Therefore, to ensure that there is no data feedback between the outer screen or inner screen and the other pins of the SPI of the outer screen or inner screen, it is necessary to ensure that there is no electrical signal on the CLK pin, MISO pin, or CS pin related to the corresponding outer screen or inner screen. Due to this, the chip pin control setup program (pinctrl) corresponding to the case in which the SPI bus is active (active) and the case in which the SPI bus sleeps (sleep) needs to be re-changed to control only statuses of the MISO and MOSI pins, leaving control of statuses of the CS and CLK pins to a slave device driver. In this way, the following is avoided: During start-up, an SPI controller driver is loaded before the slave device driver, and first obtains control over the CS and CLK pins, and the slave device driver fails to obtain control over the CS and CLK pins, resulting in that the slave device driver fails to control the CS and CLK pins.

According to the electronic device and the resource control method provided in embodiments of this application, when an infrared device is added, there is no need to add an SPI resource. The infrared device is driven by use of the SPI resource corresponding to the inner screen or outer screen, saving costs of the electronic device. In addition, space in the electronic device can be saved, which is beneficial for use in a small-volume electronic device.

An embodiment of this application provides an electronic device. The electronic device includes: a memory, configured to store instructions executed by one or more processors of the electronic device, and a processor, being one of the processors of the electronic device and configured to perform the resource control method mentioned in this application.

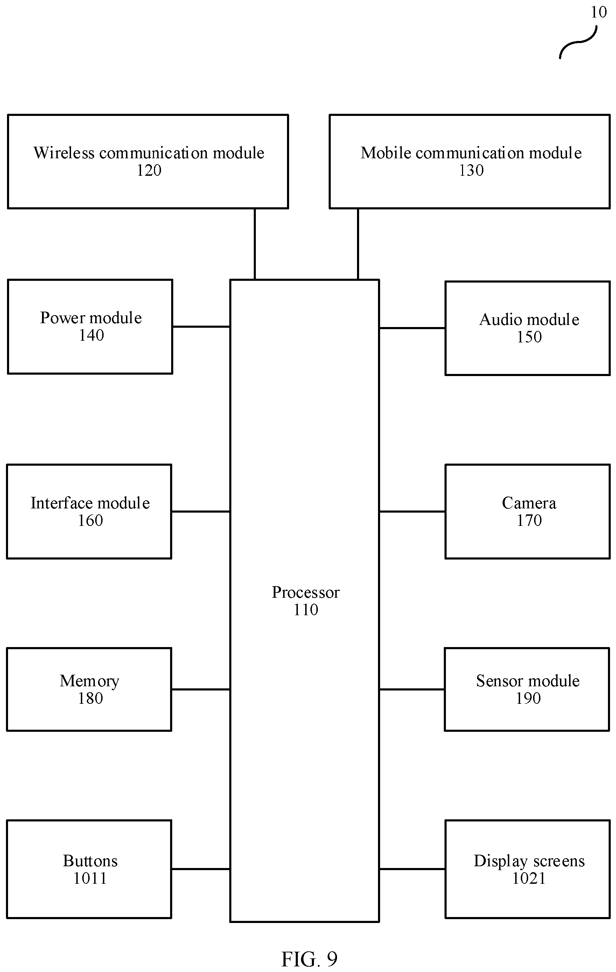

FIG. 9 is a diagram of a hardware structure of an electronic device according to an embodiment of this application. As shown in FIG. 9, the electronic device 10 may include a processor 110, a power module 140, a memory 180, a mobile communication module 130, a wireless communication module 120, a sensor module 190, an audio module 150, a camera 170, an interface module 160, buttons 1011, display screens 1021, and the like.

It may be understood that the structure illustrated in this embodiment of this application does not constitute a specific limitation on the electronic device 10. In some other embodiments of this application, the electronic device 10 may include more or fewer components than those shown in the figure, some components may be combined, some components may be split, or different component arrangements may be used. The components shown in the figure may be implemented by hardware, software, or a combination of software and hardware.

The processor 110 may include one or more processing units, for example, may include a processing module or processing circuit of a central processing unit, an image processor, a digital signal processor, a microprocessor, an artificial intelligence processor, a programmable logic device, or the like. Different processing units may be separate devices, or may be integrated into one or more processors. A storage unit may be disposed in the processor 110, and is configured to store instructions and data. In some embodiments, the storage unit in the processor 110 is a cache 180. The processor may be configured to perform the resource control method provided in embodiments of this application.

In some embodiments, the processor 110 may have a plurality of groups of SPIs, for example, may include the first SPI and the second SPI mentioned above.

The display screens 1021 are configured to display human-machine interaction interfaces, images, videos, and the like. The display screens 1021 include the inner screen and outer screen mentioned in this application.

The sensor module 190 may include an optical proximity sensor, a pressure sensor, a gyroscope sensor, a barometric pressure sensor, a magnetic sensor, an acceleration sensor, a distance sensor, a fingerprint sensor, a temperature sensor, a touch sensor, an ambient light sensor, a bone conduction sensor, and the like.

The audio module 150 is configured to convert digital audio information into an analog audio signal for output, or convert an analog audio input into a digital audio signal. The audio module 150 may be further configured to encode and decode audio signals. In some embodiments, the audio module 150 may be disposed in the processor 110, or some of functional modules of the audio module 150 are disposed in the processor 110. In some embodiments, the audio module 150 may include a speaker, a receiver, a microphone, and a headset jack.

In some embodiments, the electronic device 10 further includes the buttons 1011, a motor, indicators, and the like. The buttons 1011 may include a volume button, a power on/off button, and the like. The motor is configured to enable the electronic device 10 to generate vibration effect. For example, when a user's electronic device 10 receives a call, the electronic device 10 generates vibration, to alert the user to the incoming call so that the user answers the call. The indicators may include a laser indicator, a radio frequency indicator, an LED indicator, and the like.

Embodiments of a mechanism disclosed in this application may be implemented in hardware, software, firmware, or a combination of these implementations. Embodiments of this application may be implemented as a computer program or program code executed on a programmable system. The programmable system includes at least one processor, a storage system (including a volatile memory and a non-volatile memory and/or a storage element), at least one input device, and at least one output device.

The program code may be applied to input instructions, to perform various functions described in this application and generate output information. The output information may be applied to one or more output devices in a known way. For purposes of this application, a processing system includes any system with a processor such as a digital signal processor (DSP), a microcontroller, an application-specific integrated circuit (ASIC), or a microprocessor.

The program code may be implemented by using a high-level programming language or an object-oriented programming language, to communicate with the processing system. The program code may be alternatively implemented by using an assembly language or a machine language when required. In fact, the mechanism described in this application is not limited to a scope of any specific programming language. In any case, the language may be a compiled language or an interpreted language.

In some cases, the disclosed embodiments may be implemented in hardware, firmware, software, or any combination thereof. The disclosed embodiments may be alternatively implemented as instructions carried by or stored on one or more temporary or non-temporary machine-readable (for example, computer-readable) storage media, and the instructions may be read and executed by one or more processors. For example, the instructions may be distributed through a network or another computer-readable medium. Therefore, the machine-readable medium may include any mechanism used for storing or transmitting information in a machine (for example, computer)-readable form, including but not limited to a floppy disk, a compact disk, a compact disc, a read-only memory (CD-ROM), a magneto-optical disk, a read-only memory (ROM), a random access memory (RAM), an erasable programmable read-only memory (EPROM), an electrically erasable programmable read-only memory (EEPROM), a magnetic card or an optical card, a flash memory, or a tangible machine-readable memory used for transmitting information (such as carriers, infrared signals, and digital signals) over the Internet by using electrical, optical, acoustic, or other forms of propagating signals. Therefore, the machine-readable medium includes any type of machine-readable medium suitable for storing or transmitting electronic instructions or information in the machine (for example, computer)-readable form.

In the accompanying drawings, some structural or method features may be shown in a particular arrangement and/or order. However, it should be understood that such a particular arrangement and/or order may not be needed. In some embodiments, these features may be arranged in a manner and/or order different from that shown in the descriptive accompanying drawings. In addition, inclusion of the structural or method features in a particular figure does not imply that such features are needed in all embodiments, and in some embodiments, these features may not be included or may be combined with other features.

It should be noted that units/modules mentioned in device embodiments of this application are all logical units/modules. Physically, one logical unit/module may be one physical unit/module, may be a part of one physical unit/module, or may be implemented by a combination of a plurality of physical units/modules. Physical implementations of these logical units/modules are not the most important, and a combination of functions implemented by these logical units/modules is a key to resolving the technical problem provided in this application. In addition, to highlight an innovative part of this application, a unit/module that is not closely related to resolving the technical problem provided in this application is not introduced in the foregoing device embodiments of this application. This does not indicate that another unit/module does not exist in the foregoing device embodiments.

It should be noted that, in the examples and specification of this patent, relational terms such as first and second are merely used to distinguish one entity or operation from another entity or operation, and do not necessarily require or imply that any such actual relationship or order exists between these entities or operations. Moreover, the term "include", "comprise", or any other variant thereof is intended to cover a non-exclusive inclusion, so that a process, a method, an object, or a device that includes a list of elements not only includes those elements but also includes other elements which are not expressly listed, or further includes elements inherent to such process, method, object, or device. Without more limitations, an element limited by "including a/an" does not exclude that there are still other same elements in the process, method, object, or device which includes the element.

Although this application has been illustrated and described with reference to some preferred embodiments of this application, a person of ordinary skill in the art should understand that various changes may be made to this application in form and detail without departing from the spirit and scope of this application.

## Claims

1. An electronic device, comprising a first screen, a second screen, a first SPI, a second SPI, and a first device, wherein the first screen and the second screen are located on different sides of the electronic device;
corresponding to that the first screen is in a display state and the first device is in a working state, the first screen is electrically connected to the first SPI, and the first device is electrically connected to the second SPI; or
corresponding to that the second screen is in a display state and the first device is in a working state, the second screen is electrically connected to the second SPI, and the first device is electrically connected to the first SPI.

2. The electronic device according to claim 1, wherein the first device is an infrared device.

3. The electronic device according to claim 1 or 2, comprising a resource control module, wherein
the resource control module is configured to: when the first screen is in the display state and it is determined that the first device needs to be started, control the first screen to be electrically connected to the first SPI, and control the first device to be electrically connected to the second SPI; and
the resource control module is configured to: when the second screen is in the display state and it is determined that the first device needs to be started, control the second screen to be electrically connected to the second SPI, and control the first device to be electrically connected to the first SPI.

4. The electronic device according to claim 3, wherein the first SPI comprises a first CS pin, a first MOSI pin, a first MISO pin, and a first CLK pin, the first CS pin, the first MOSI pin, the first MISO pin, and the first CLK pin are connected to the first screen, and the first MOSI pin is connected to the first device; and
the second SPI comprises a second CS pin, a second MOSI pin, a second MISO pin, and a second CLK pin, the second CS pin, the second MOSI pin, the second MISO pin, and the second CLK pin are connected to the second screen, and the second MOSI pin is connected to the first device.

5. The electronic device according to claim 4, wherein the controlling the first screen to be electrically connected to the first SPI, and controlling the first device to be electrically connected to the second SPI comprises: controlling, by the resource control module, the first MOSI pin to be electrically connected to the first screen, and controlling the first device to be electrically connected to the second MOSI pin; and
the controlling the second screen to be electrically connected to the second SPI, and controlling the first device to be electrically connected to the first SPI comprises: controlling, by the resource control module, the second MOSI pin to be electrically connected to the second screen, and controlling the first device to be electrically connected to the first MOSI pin.

6. The electronic device according to claim 5, wherein the resource control module comprises a first control device, a second control device, a first switch device, a second switch device, a third switch device, and a fourth switch device;
an input terminal of the first switch device is connected to the first screen, an output terminal of the first switch device is separately connected to an input terminal of the second switch device and the first MOSI pin, and a control terminal of the first switch device is connected to the first control device;
the input terminal of the second switch device is further connected to the first MOSI pin, an output terminal of the second switch device is connected to the first device, and a control terminal of the second switch device is connected to the second control device;
an input terminal of the third switch device is connected to the first screen, an output terminal of the third switch device is separately connected to an input terminal of the fourth switch device and the second MOSI pin, and a control terminal of the third switch device is connected to the second control device; and
the input terminal of the fourth switch device is further connected to the second MOSI pin, an output terminal of the fourth switch device is connected to the first device, and a control terminal of the fourth switch device is connected to the first control device.

7. The electronic device according to claim 6, wherein the first switch device, the second switch device, the third switch device, and the fourth switch device are MOSs, and the first control device and the second control device are PMICs.

8. The electronic device according to claim 6 or 7, wherein the resource control module controls the first screen to be electrically connected to the first SPI and controls the first device to be electrically connected to the second SPI in the following manner:
when the first screen is in the display state and it is determined that the first device needs to be started, the resource control module controls the first control device to output a high level to the control terminals of the first switch device and the fourth switch device, and controls the second control device to output a low level to the control terminals of the second switch device and the third switch device; or
the resource control module is configured to: when the second screen is in the display state and it is determined that the first device needs to be driven, control the second control device to output a high level to the control terminals of the second switch device and the third switch device, and control the first control device to output a low level to the control terminals of the first switch device and the fourth switch device.

9. A resource control method, used on an electronic device, wherein the electronic device comprises a first screen, a second screen, a first SPI, a second SPI, and a first device, and the first screen and the second screen are located on different sides of the electronic device; and
the method comprises:
corresponding to that the first screen is in a display state and it is determined that the first device needs to be started, controlling the first screen to be electrically connected to the first SPI, and controlling the first device to be electrically connected to the second SPI; or
corresponding to that the second screen is in a display state and it is determined that the first device needs to be started, controlling the second screen to be electrically connected to the second SPI, and controlling the first device to be electrically connected to the first SPI.

10. An electronic device, comprising: a memory, configured to store instructions executed by one or more processors of the electronic device, and a processor, being one of the processors of the electronic device and configured to perform the resource control method according to claim 9.
